# EUROPÄISCHE PATENTSCHRIFT

(11) **EP 2 289 736 B1**
(45) Veröffentlichungstag und Bekanntmachung des Hinweises auf die Patenterteilung: **28.03.2012**
(21) Anmeldenummer: 10174721.0
(22) Anmeldetag: 31.08.2010
(51) Int. Cl.: B60P 7/08

(54) **Verzurrvorrichtung**
Lashing device
Dispositif de fixation

(30) Priorität: 31.08.2009 DE 102009039314
(43) Veröffentlichungstag der Anmeldung: 02.03.2011
(73) Patentinhaber: YMOS GmbH, 55743 Idar-Oberstein (DE)
(72) Erfinder: Schwab, Dittmar, 63110 Rodgau (DE); Kley, Frank, 55767 Gimbweiler (DE)
(74) Vertreter: Ostermann, Thomas

(56) Entgegenhaltungen:
- WO-A1-2006/028387
- DE-U1- 20 204 413
- DE-U1-202005 012 945
- US-A- 3 917 213

## Beschreibung

Die Erfindung betrifft eine Verzurrvorrichtung zum Verzurren von Ladegütern, Bändern und dergleichen in Fahrzeugen mit einer Verzurröse enthaltend einen Bügel, der zu einem ortsfesten Halter zwischen einer versenkten Lage und einer aufrechten Lage um eine Schwenkachse schwenkbar angeordnet ist.

Aus der EP 1 568 540 A1 ist eine Verzurrvorrichtung für Ladegüter, Bänder und dergleichen in Fahrzeugen bekannt, bei der eine Verzurröse an einem Boden- oder Seitenblech eines Fahrzeugs verschraubt befestigt ist. Die Verzurröse dient zur Befestigung der Ladegüter in einem Kofferraum des Fahrzeugs, so dass das Ladegut lagegesichert transportiert werden kann. Die bekannte Verzurröse weist einen Bügel auf, der um eine Schwenkachse schwenkbar an einem mit dem Boden- oder Seitenblech des Fahrzeugs innenraumseitig befestigten Halter angeordnet ist. Die Verzurröse ist zwischen einer versenkten Lage, in der sich die Verzurröse in einer Ruhestellung befindet, und einer aufrechten Lage, in der sich die Verzurröse in einer Gebrauchsstellung befindet und somit zur Befestigung des Ladegutes an demselben geeignet ist, verschwenkbar. Befindet sich innerhalb einer Öffnung des Bügels eine ortsfest angeordnete Abdeckung, die in der versenkten Lage des Bügels eine durchgehende ebene Oberseite der Verzurröse ermöglicht, ist es für eine Bedienperson schwierig, den Bügel zu erfassen und in die aufrechte Lage zu verbringen.

Aus WO 2006028387 und US3917213 sind weitere Verzurrvorrichtungen bekannt.

Aufgabe der vorliegenden Erfindung ist es daher, eine Verzurrvorrichtung mit einer Verzurröse enthaltend einen schwenkbaren Bügel derart weiterzubilden, dass bedienungsfreundlich das Verbringen des Bügels aus einer versenkten Lage in eine aufrechte Lage vereinfacht wird.

Zur Lösung der Aufgabe ist die Erfindung in Verbindung mit dem Oberbegriff des Patentanspruchs 1 dadurch gekennzeichnet, dass eine Öffnung des Bügels in der versenkten Lage desselben mittels einer ortsfest angeordneten Abdeckung verdeckt ist, dass der Abdeckung eine Druckmechanikeinrichtung zugeordnet ist, die ein manuell betätigbares Druckelement und mindestens einen mit dem Druckelement wirkverbundenen Betätigungsarm aufweist, derart, dass bei Betätigen des Druckelementes der Betätigungsarm so auf den Bügel einwirkt, dass der Bügel aus der versenkten Lage in die aufrechte Lage verbracht wird.

Nach der Erfindung ist in einer Abdeckung der Verzurrvorrichtung eine Druckmechanikeinrichtung integriert angeordnet, die über ein manuell betätigbares Druckelement sowie über einen mit demselben wirkverbundenen Betätigungsarm verfügt. Vorteilhaft kann hierdurch bedienungsfreundlich lediglich durch Aufbringen einer Druckkraft - wie bei einer Taste - ein Bügel der Verzurröse aus der versenkten Lage in die aufrechte Lage (Gebrauchsstellung) verbracht werden, in der beispielsweise Bänder an dem Bügel angebracht oder durchgezogen werden können bzw. der Bügel durch eine Bedienperson erfasst und in eine gewünschte aufrechte Gebrauchsstellung weiterbewegt werden kann. Die Schwenkbewegung des Bügels bzw. das Anheben des Bügels erfolgt dabei im Wesentlichen in entgegengesetzter Richtung zur Drehkraft.

Nach einer besonderen Ausführungsform der Erfindung ist der Betätigungsarm der Druckmechanikeinrichtung als eine Wippe ausgebildet, die an einer ortsfesten Lagerstelle der Abdeckung oder des Halters schwenkbar um eine Drehachse gelagert ist. Ein erstes Ende der Wippe ist mit dem Druckelement gekoppelt. Ein zweites Ende der Wippe ist einem Verstellabschnitt des Bügels zugeordnet. Vorteilhaft kann hierdurch platzsparend die auf das Druckelement aufzubringende Druckkraft begrenzt werden.

Nach einer Weiterbildung der Erfindung ist das Druckelement derart dimensioniert, dass es bedienungsfreundlich mittels eines Fingers der Bedienperson erfasst bzw. niedergedrückt werden kann. Ferner ist das Druckelement in einer Einfassungsöffnung der Abdeckung angeordnet und schließt in einer Nichtbetätigungsposition bündig ab. In der versenkten Lage des Bügels ergibt sich somit eine durchgehende flächige Oberfläche der Verzurröse, die eine Ablagerung von Schmutzteilen und dergleichen verhindert. Das Säubern des Innenraumes des Fahrzeugs wird somit vereinfacht. Darüber hinaus wird das Auftreten von unerwünschten Ausnehmungen bzw. Öffnungen vermieden, so dass die Verzurröse wie die anschließenden Boden- oder Seitenwände im Innenraum des Fahrzeugs eine durchgehende Fläche bilden.

Nach einer Weiterbildung der Erfindung ist die Druckmechanikeinrichtung bzw. die Wippe der Druckmechanikeinrichtung in einem zu der Schwenkachse des Bügels beabstandeten Bereich angeordnet, so dass das Aufbringen der Druckkraft zum Verschwenken des Bügels verringert werden kann.

Nach einer Weiterbildung der Erfindung weist die Druckmechanikeinrichtung zur Bildung eines Drehlagers einen Verdünnungsabschnitt auf, der den Betätigungsarm mit dem Druckelement verbindet und eine relativ dünne Wandstärke aufweist, so dass bei Hubbewegung des Druckelementes der Verdünnungsabschnitt sich leicht verformen kann bzw. der Bewegung des Druckelementes folgen kann und gleichzeitig eine entsprechende Schwenkkraft in den Betätigungsarm einleiten kann. Im Wesentlichen sind der Betätigungsarm, der Verdünnungsabschnitt und das Druckelement aus einem starren Kunststoffmaterial hergestellt.

Nach einer Weiterbildung der Erfindung weist die Druckmechanikeinrichtung einen Anschlag zur Begrenzung der Drehbewegung des Betätigungsarmes (Wippe) auf, so dass ein Überdehnen des vorzugsweise aus einem Kunststoffmaterial bestehenden Betätigungsarmes verhindert wird.

Nach einer Weiterbildung der Erfindung ist ein Paar von Betätigungsarmen vorgesehen, wobei jeweils zweite Enden der Betätigungsarme auf einen gegenüberliegenden Verstellabschnitt des Bügels einwirken. Vorteilhaft ergeben sich somit zwei Angriffspunkte an dem Bügel, was den Verschwenkmechanismus des Bügels vereinfacht.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine Draufsicht auf eine Verzurröse mit einem Bügel, der sich in einer versenkten Lage befin- det,
- Figur 2: einen Schnitt durch die Verzurröse entlang der Schnittlinie II-II in Figur,

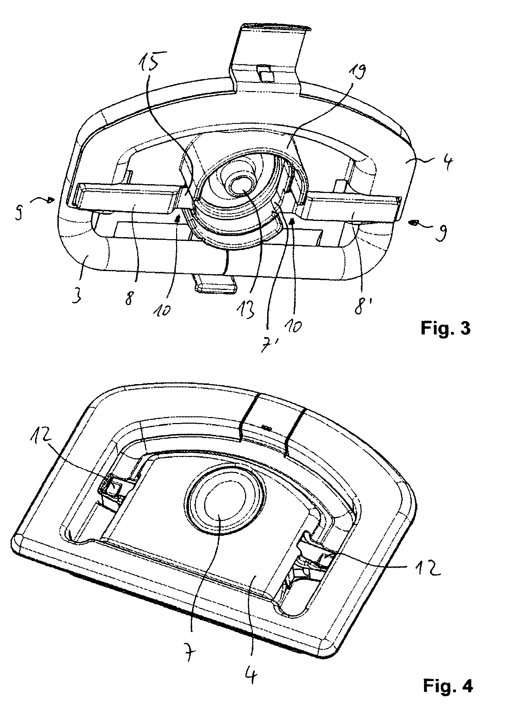

- Figur 3: eine perspektivische Darstellung der Verzurröse gemäß Figur 1 von unten, wobei ein Halter der Verzurröse zur vereinfachten Darstellung wegge- lassen worden ist,
- Figur 4: eine perspektivische Draufsicht der Verzurröse gemäß Figur 1, bei der lediglich eine Abdeckung und eine Druckmechanikeinrichtung dargestellt sind,
- Figur 5: einen Schnitt durch eine Druckmechanikeinrich- tung der Verzurröse und
- Figur 6: eine Explosionsdarstellung der Verzurröse.

Eine Verzurrvorrichtung zum Verzurren von Ladegütern, Bändern und dergleichen in einem Innenraum eines Fahrzeugs ist vorzugsweise an einer nicht dargestellten Boden- oder Seitenwand des Fahrzeugs befestigt. Die Verzurrvorrichtung weist eine Verzurröse 1 auf, die im Wesentlichen einen an der Boden- oder Seitenwand des Fahrzeugs befestigbaren Halter 2, einen relativ zu dem ortsfesten Halter 2 um eine Schwenkachse S verschwenkbaren Bügel 3 sowie eine in einer Öffnung des Bügels 3 angeordnete Abdeckung 4 aufweist.

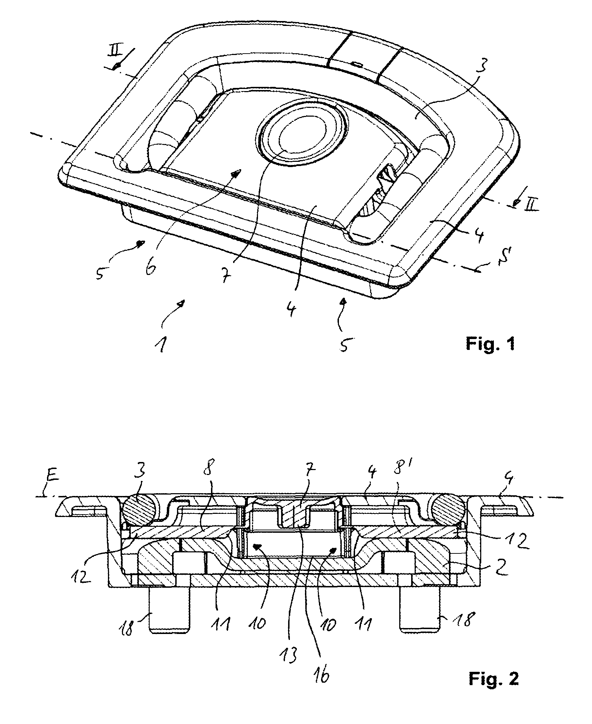

In einer versenkten Lage (Ruhestellung) des Bügels 3 erstreckt sich der Bügel 3 in einer gemeinsamen Ebene zu der Abdeckung 4 bzw. benachbarter Wände des Fahrzeugs. Die Abdeckung 4 ist als ein Abdeckgehäuse ausgebildet und kann eine bündig zu einer benachbarten nicht dargestellten Wandung des Fahrzeugs verlaufende Abdeckwandung aufweisen. Wie aus Figur 1 ersichtlich ist, ist der ringförmige Bügel 3 an zwei Lagerstellen 5 des Halters 2 drehbar gelagert. Ein Rand der Abdeckung 4 deckt einen entlang der Schwenkachse S verlaufenden Schwenkachsenbereich des Bügels 3 ab.

Zum Verbringen des Bügels 3 aus der versenkten Lage in eine aufrechte Lage (Gebrauchsstellung) ist eine Druckmechanikeinrichtung 6 vorgesehen, die im Wesentlichen ein manuell betätigbares Druckelement 7 und einen mit dem Druckelement 7 wirkverbundenen Betätigungsarm 8, 8' aufweist.

Das Druckelement 7 ist vorzugsweise einstückig mit den Betätigungsarmen 8, 8' verbunden.

Das Druckelement 7 ist tastenartig ausgebildet und innerhalb einer Einfassungsöffnung der Abdeckung 4 angeordnet. In einer Nichtbetätigungsposition des Druckelementes 7 schließt dieses bündig zu einer Oberseite der Abdeckung 4 ab. Das Druckelement 7 ist derart dimensioniert, dass es mittels eines Fingerendes der Bedienperson betätigbar bzw. quer zu einer Erstreckungsebene E der Abdeckung 4 drückbar ist, damit es so auf die paarweise angeordneten Betätigungsarme 8, 8' einwirkt, dass durch Verschwenken der Betätigungsarme 8, 8' eine Verstellkraft auf einen Verstellabschnitt 9 des Bügels 3 ausgeübt wird, die den Bügel 3 aus der versenkten Lage in die aufrechte Lage verbringt. Hierzu sind die paarweise angeordneten Betätigungsarme 8, 8' jeweils als eine Wippe ausgebildet, die an einem ortsfesten Drehlager 10 der Abdeckung 4 schwenkbar um eine Drehachse D gelagert sind. Die Drehachse D verläuft senkrecht zu der Schwenkachse S. Ein erstes Ende 11 der Wippe 8, 8' ist im Bereich einer Unterseite des Druckelementes 7 an dasselbe angeformt. Ein zweites Ende 12 der Wippe 8, 8' ist dem Verstellabschnitt 9 des Bügels 3 zugeordnet und liegt in der versenkten Lage desselben an dem Verstellabschnitt 9 unmittelbar an.

Das Drehlager 10 ist gebildet durch einen Verdünnungsabschnitt 15 in einem Verbindungsbereich zwischen den Betätigungsarmen 8, 8' auf der einen Seite und eine in Druckrichtung verlaufende Ringwandung 7' des Druckelementes 7 auf der anderen Seite.

Dieser Verdünnungsabschnitt 15 ist quasi filmscharnierartig ausgebildet. Durch Drücken des Druckelementes 7 in Druckrichtung senkrecht zur Erstreckungsebene E wird der Verdünnungsabschnitt 15 in Richtung einer mittleren Vertiefung 16 des Halters 2 bewegt, wobei durch Hebelwirkung insbesondere ein freies Ende 12 der Betätigungsarme 8, 8' in entgegengesetzter Richtung zur Linearbewegung des Druckelementes 7 den Bügel 3 aus der Erstreckungsebene E herausdrückt.

Das Paar von Betätigungsarmen 8, 8' ist somit langgestreckt ausgebildet und erstreckt sich zwischen zwei gegenüberliegenden Verstellabschnitten 9 des Bügels 3. Die Wippen 8, 8' erstrecken sich in einem zu der Schwenkachse S beabstandeten Bereich im Wesentlichen parallel zu derselben, so dass die durch das Druckelement 7 aufzubringende Schwenkkraft zum Verschwenken des Bügels 3 handhabungstechnisch klein ist.

In einem Verbindungsbereich der Wippen 8, 8' bzw. in einem zentralen Bereich des Druckelementes 7 ragt auf einer dem Halter 2 zugewandten Seite ein Anschlagnocken 13 ab, der die Hubbewegung des Druckelementes 7 bzw. Schwenkbewegung der Wippen 8, 8' so begrenzt, dass eine Überdehnung der Wippen 8, 8' vermieden wird. Der Anschlagnocken 13 weist eine solche Länge auf, dass bei Anschlagen des Anschlagnockens 13 an eine Anschlagfläche 14 des Halters 2 der Bügel 3 in einer solchen aufrechten Lage verbracht worden ist, in der er manuell von einer Bedienperson erfasst und gegebenenfalls weiter verschwenkt werden kann in die Gebrauchsstellung, in der an dem Bügel 3 der Verzurröse 1 ein Band oder dergleichen befestigt wird.

Vorzugsweise sind das Druckelement 7 sowie der Anschlagnocken 13 einstückig mit den Wippen 8, 8' (Schenkeln) verbunden. Beispielsweise kann das Druckelement 7 zusammen mit dem Anschlagnocken 13 an den Wippen 8, 8' angespritzt sein. Vorzugsweise besteht das so gebildete Bauteil aus einem Kunststoffmaterial, das durch Spritzgießen hergestellt ist.

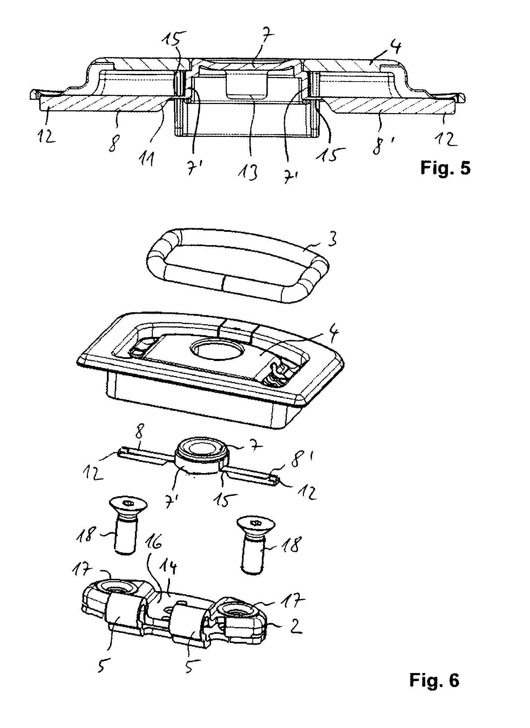

Der Halter 2 weist zwei Bohrungen 17 auf, durch die in einer Montageposition jeweils eine Schraube 18 greift zur Befestigung der Verzurröse 1 bzw. des Halters 2 an einer nicht dargestellten Wandung des Kraftfahrzeugs. Das Abdeckgehäuse 4 ist vorzugsweise lösbar, beispielsweise durch Rastung oder Verschraubung mit dem Halter 2 verbunden. Die Abdeckung 4 weist eine zentrale Ringwandung 19 auf, in der das Druckelement 7 geführt gelagert ist. In gegenüberliegenden Schlitzen der Ringwandung 19 ist der Verdünnungsabschnitt 15 des Betätigungsarms 8, 8' gelagert, der im Vergleich zu dem Hauptabschnitt des Betätigungsarms 8, 8' relativ dünnwandig ausgebildet ist, siehe Figur 2 bzw. Figur 5. Die Wandstärke des Verdünnungsabschnitts 15 ist derart groß gewählt, dass ein Brechen zwischen dem Druckelement 7 und dem Betätigungsarmen 8, 8' bei der Hubbewegung des Druckelementes nicht möglich ist. Zum anderen ist der Verdünnungsabschnitt wie der gesamte Betätigungsarm 8, 8' relativ starr ausgebildet, so dass bei Hubbewegung des Druckelements 7 eine ausreichend große Verstellkraft auf den Bügel 3 ausgeübt werden kann. Der Verdünnungsabschnitt 15 definiert somit den Ort des Drehlagers 10, um durch lineare Bewegung des Druckelementes 7 eine Hebelbewegung der Betätigungsarme 8, 8' um eine durch den Verdünnungsabschnitt 15 verlaufende Schwenkachse zu erreichen. Die Schwenkachse verläuft senkrecht zur Hubbewegung des Druckelementes 7 bzw. parallel zu der Erstreckungsebene E.

Nach einer nicht dargestellten alternativen Ausführungsform kann das Drehlager 10 auch durch Rastarme ausgebildet sein, in denen die Wippe 8, 8' schwenkbar gelagert ist.

Nach einer nicht dargestellten weiteren Ausführungsform der Erfindung kann in einem Bereich zwischen dem Drehlager 10 und dem zweiten Ende 12 der Wippe 8, 8' ein von derselben abragendes Federelement vorgesehen sein, das sich an einer Anlagefläche der Abdeckung 4 abstützt. Vorzugsweise erstreckt sich die Anlagefläche rechtwinklig zu einer Oberseite der Abdeckung 4 bzw. ist zu dieser geneigt angeordnet, so dass nach Lösen der auf das Druckelement 7 (Druckknopf) wirkenden Druckkraft die Wippen 8, 8' bzw. das Druckelement 7 wieder in die Ausgangsstellung verbracht werden. Das Druckelement 7 ist dann wieder bündig zu der Abdeckung 4 angeordnet und zu einer weiteren Bedienung bereit, sobald der Bügel 3 wieder in seine versenkte Lage verbracht worden ist.

Nach einer weiteren nicht dargestellten Ausführungsform der Erfindung können auch lediglich die Wippen 8, 8' einstückig miteinander verbunden sein, wobei das Druckelement 7 als gesondertes Kunststoffbauteil hergestellt ist.

Nach einer weiteren nicht dargestellten Ausführungsform der Erfindung können paarweise angeordnete Wippen auch als gesonderte Bauteile ausgebildet sein, die mit ihren ersten Enden schwenkbar in entsprechende Aufnahmen eines Druckelementes gelagert sind. In dieser Ausführungsform besteht die Druckmechanikeinrichtung 6 aus drei Bauteilen.

Nach einer nicht dargestellten Ausführungsform der Verzurröse kann auch lediglich ein einziger Betätigungsarm 8 vorgesehen sein.

## Patentansprüche

1. Verzurrvorrichtung zum Verzurren von Ladegütern, Bändern und dergleichen in Fahrzeugen mit einer Verzurröse (1) enthaltend einen Bügel (3), der zu einem ortsfesten Halter (2) zwischen einer versenkten Lage und einer aufrechten Lage um eine Schwenkachse (S) schwenkbar angeordnet ist, **dadurch gekennzeichnet, dass** eine Öffnung des Bügels (3) in der versenkten Lage desselben mittels einer ortsfest angeordneten Abdeckung (4) verdeckt ist, dass der Abdeckung (4) eine Druckmechanikeinrichtung (6) zugeordnet ist, die ein manuell betätigbares Druckelement (7) und mindestens einen mit dem Druckelement (7) wirkverbundenen Betätigungsarm (8, 8') aufweist, derart, dass bei Betätigen des Druckelementes (7) der Betätigungsarm (8, 8') so auf den Bügel (3) einwirkt, dass der Bügel (3) aus der versenkten Lage in die aufrechte Lage verbracht wird.

2. Verzurrvorrichtung nach Anspruch 1, **dadurch gekennzeichnet, dass** der Betätigungsarm (8, 8') als eine Wippe ausgebildet ist, die schwenkbar gelagert ist, wobei ein erstes Ende (11, 19) der Wippe (8, 8') mit dem Druckelement (7) gekoppelt ist und wobei ein zweites Ende (12) der Wippe (8, 8') in der versenkten Lage an einem Verstellabschnitt (9) des Bügels (3) angreift.

3. Vorrichtung nach Anspruch 1 oder 2, **dadurch gekennzeichnet, dass** die Wippe (8, 8') mittels eines Drehlagers (10) der Abdeckung (4) angeordnet ist.

4. Vorrichtung nach einem der Ansprüche 1 bis 3, **dadurch gekennzeichnet, dass** das Druckelement (7) in eine Einfassungsöffnung der Abdeckung (4) angeordnet ist und so dimensioniert ist, dass es mittels eines Fingerendes der Bedienperson betätigbar bzw. quer zu einer Erstreckungsebene (E) der Abdeckung (4) bewegbar ist.

5. Vorrichtung nach einem der Ansprüche 1 bis 4, **dadurch gekennzeichnet, dass** sich die Wippe (8, 8') in einem zu der Schwenkachse (S) beabstandeten Bereich erstreckt und dass die Wippe (8, 8') parallel zu der Schwenkachse (S) verläuft.

6. Vorrichtung nach einem der Ansprüche 1 bis 5, **dadurch gekennzeichnet, dass** das Druckelement (7) einstückig mit der Wippe (8, 8') verbunden ist.

7. Vorrichtung nach einem der Ansprüche 1 bis 6, **dadurch gekennzeichnet, dass** die Wippe (8, 8') auf einem dem Druckelement (7) zugewandten Ende (11) einen Verdünnungsabschnitt (15) aufweist zu Bildung des Drehlagers (10).

8. Vorrichtung nach einem der Ansprüche 1 bis 7, **dadurch gekennzeichnet, dass** der Verdünnungsabschnitt (15) flexibler ausgebildet als der Betätigungsarm (8, 8').

9. Vorrichtung nach einem der Ansprüche 1 bis 8, **dadurch gekennzeichnet, dass** von dem Druckelement (7) und/oder von dem ersten Ende (11) der Wippe (8, 8') ein Anschlagnocken (13) abragt, der zur Begrenzung der Drehbewegung der Wippe (8, 8') an eine Anschlagfläche (14) des Halters (2) stoßbar ist.

10. Vorrichtung nach einem der Ansprüche 1 bis 9, **dadurch gekennzeichnet, dass** ein Paar von Wippen (8, 8') vorgesehen ist, wobei die Wippen (8, 8') geradlinig zwischen zwei gegenüberliegenden Verstellabschnitten (9) des Bügels (3) verlaufen und wobei die zweiten Enden (12) der Wippen (8, 8') in der versenkten Lage des Bügels (3) unmittelbar an dem jeweiligen Verstellabschnitt (9) desselben anliegen.

## Claims

1. Lashing device for lashing loads, belts and such like inside vehicles comprising a lashing lug (1) with a shackle (3) which is adapted to be tilted around a swivel axis (S) between a position flush with and a position upright relative to a stationary holder (2), **characterized in that** an opening in said shackle (3) is concealed by a stationary cover (4) in said flush position and that the cover (4) has a pressure mechanism (6) assigned to it which comprises a manually operated pressure element (7) and at least one operating arm (8, 8') actively connected thereto such that when actuating said pressure element (7) the operating arm (8, 8') acts on said shackle (3) in such a way that the shackle (3) is brought from a horizontal or flush position into an upright position.

2. Lashing device according to Claim 1, **characterized in that** the operating arm (8, 8') is in the form of a rocking member in tilting arrangement wherein a first end (11, 19) of said rocking member (8, 8') is linked to said pressure element (7) and wherein a second end (12) thereof engages an adjustment section (9) of the shackle (3) when in flush position.

3. Device according to Claim 1 or 2, **characterized in that** the rocking (8, 8') is arranged by means of a pivot bearing (10) of said cover (4).

4. Device according to any of the preceding Claims 1 to 3, **characterized in that** the pressure element (7) is disposed in an aperture of the cover (4) and dimensioned such that it can be operated with the tip of an operator's finger and/or moved cross to an extension plane (E) of the cover (4).

5. Device according to any of the preceding Claims 1 to 4, **characterized in that** the rocking member (8, 8') extends in an area spaced from the swivel axis (S) and parallel with said swivel axis (S).

6. Device according to any of the preceding Claims 1 to 5, **characterized in that** the pressure element (7) is integral with said rocking member (8, 8').

7. Device according to any of the preceding Claims 1 to 6, **characterized in that** at an end (11) facing the pressure element (7) the rocking member (8, 8') has a thinned section (15) forming the pivot bearing (10).

8. Device according to any of the preceding Claims 1 to 7, **characterized in that** the thinned section (15) is more flexible than the operating arm (8, 8') is.

9. Device according to any of the preceding Claims 1 to 8, **characterized in that** a stop cam (13) protrudes from the pressure element (7) and/or from the first end of the rocking member (8, 8') that can be pushed against a contact face (14) of the holder (2) to confine the pivotal movement of said rocking member (8, 8').

10. Device according to any of the preceding Claims 1 to 9, **characterized in that** a pair of rocking members (8, 8') is provided which extend in a straight line between two opposing adjustment sections (9) of the shackle (3) and whose second ends (12) are in a direct contact with the respective adjustment section (9) thereof.

## Revendications

1. Dispositif de fixation pour la fixation de marchandises, de bandes de fixation et de pièces analogues, dans des véhicules automobiles, avec une boucle d'arrimage (1), qui comprend un étrier (3), qui est disposé, pivotant autour d'un axe de pivotement (S), entre une position escamotée et une position redressée, par rapport à un support fixe (2), **caractérisé en ce que**, dans une position escamotée de l'étrier (3), une ouverture de celui-ci est recouverte par un cache (4) fixe, qu'un dispositif mécanique à pression (6), qui présente un élément de pression (7), peut être actionné manuellement, et au moins un bras d'actionnement (8, 8'), qui coopère avec ledit élément de pression (7), est associé au cache (4), afin que, lors de l'actionnement de l'élément de pression (7), le bras d'actionnement (8, 8') agisse sur l'étrier (3) de aorte que ledit étrier (3) soit amené de la position escamotée dans la position redressée.

2. Dispositif de fixation selon la revendication 1, **caractérisé en ce que** le bras d'actionnement (8, 8') est réalisé sous la forme d'une bascule, qui est montée à pivotement, sachant qu'une première extrémité (11, 19) de la bascule (8, 8') est couplée avec l'élément de pression (7) et qu'une deuxième extrémité (12) de la bascule (8, 8') s'engage, dans la position escamotée, dans une section mobile (9) de l'étrier (3).

3. Dispositif selon revendication 1 ou 2, **caractérisé en ce que** la bascule (8, 8') est agencée sur le cache (4) au moyen d'un coussinet de pivotement (10).

4. Dispositif selon l'une des revendications 1 à 3, **caractérisé en ce que** l'élément de pression (7) est disposé dans une ouverture du cache (4) et est dimensionné de sorte qu'il puisse être actionné du bout du doigt par un opérateur, respectivement déplacé transversalement par rapport à un premier plan (E), dans lequel s'étend le cache (4).

5. Dispositif selon l'une des revendications 1 à 4, **caractérisé en ce que** la bascule (8, 8') s'étend dans une zone distancée de l'axe de pivotement (S), et que ladite bascule (8, 8') est orientée parallèlement à l'axe de pivotement (S).

6. Dispositif selon l'une des revendications 1 à 5, **caractérisé en ce que** l'élément de pression (7) est relié d'une pièce à la bascule (8, 8').

7. Dispositif selon l'une des revendications 1 à 6, **caractérisé en ce que** la bascule (8, 8') présente, à une extrémité (11) orientée vers l'élément de pression (7), une section amincie (15) pour la formation du coussinet de pivotement (10).

8. Dispositif selon l'une des revendications 1 à 7, **caractérisé en ce que** la section amincie (15) est de conception plus flexible que le bras d'actionnement (8, 8').

9. Dispositif selon l'une des revendications 1 à 8, **caractérisé en ce qu'**une came de butée (13), qui peut heurter une surface de butée (14) du support (2) pour limiter le mouvement de rotation de la bascule (8, 8'), est en saillie de l'élément de pression (7) et / ou de la première extrémité (11) de la bascule (8, 8').

10. Dispositif selon l'une des revendications 1 à 9, **caractérisé en ce qu'**est prévue une paire de bascules (8, 8'), sachant que lesdites bascule (8, 8') s'étendent en ligne droite entre deux sections mobiles (9) de l'étrier (3) opposées, et sachant que les deuxièmes extrémités (12) des bascules (8, 8') portent directement contre la section mobile respective (9) de l'étrier (3), quand celui-ci est en position escamotée.
